# EUROPEAN PATENT APPLICATION

(11) **EP 3 258 440 A1**
(43) Date of publication of application: **20.12.2017**
(21) Application number: 17175956.6
(22) Date of filing: 14.06.2017
(51) Int. Cl.: G06Q 50/30, G06F 17/30

(54) **TRANSPORTATION DATA ANALYTICS FRAMEWORK SUPPORTING ADDITIONAL PROGRAMMING LANGUAGES**

(30) Priority: 14.06.2016 US 201615182136
(71) Applicant: General Electric Company, Schenectady, NY 12345 (US)
(72) Inventor: KOZMAN, Ken Scot, Niskayuna, NY New York 12309 (US); ROMER, Michael Vincent, Niskayuna, NY New York 12309 (US); GRIMES, Paul Michael, Niskayuna, NY New York 12309 (US); MEISKE, Erich, Niskayuna, NY New York 12309 (US); ERICKSON, Robert, Niskayuna, NY New York 12309 (US)
(74) Representative: Williams, Andrew Richard

(57) **Abstract**

Provided are a method and device for analyzing transportation data within a transportation analytics framework 400. For example, the method may include receiving transportation data having a representation 410 compatible with the transportation analytics framework 400 including a transportation analytics programming language. The method may also include converting the transportation data into a representation 420 compatible with a second programming language that is different than the transportation analytics programming language, and performing analytics 430 on the converted transportation data 420 within the transportation analytics framework 400 using at least one analytic generated based on the second programming language.

## Description

### BACKGROUND

While an aircraft is flying, hundreds or even thousands of parameters may be continuously monitored and stored. For example, flight control inputs, throttle movement, speed and altitude, GPS location, oil pressure, system warnings, and the like, may be captured and recorded. Traditionally, aircraft data was stored in a crash-survivable flight data recorder (FDR) and was only accessed in the event of a serious incident with the aircraft. However, as technology has progressed, flight data has become more accessible through the addition of quick-access recorders (QARs) and the like, which are designed to enable maintenance personnel to routinely download aircraft data. This readily accessible flight data has enabled the development of flight data analysis programs which are used for modem aviation management.

For example, flight data may be analyzed to transform the data into actionable insights that may improve safety, efficiency, and behavior of an aircraft and airline, reduce operating costs, and increase aircraft utilization. The flight data may be collected and analyzed to reveal high-risk events and trends which can enable operators to proactively and effectively manage risk. Flight data analysis is also widely used in support of maintenance and engineering of an aircraft by optimizing fuel usage, reducing emissions, and improving aircraft component life.

A typical flight data analysis process begins with maintenance personnel performing routine collection of digital flight data from an aircraft. Once collected, the flight data may be transmitted to a central flight data analysis system for automated processing, analysis by trained personnel, and dissemination to operational managers for action. Newer systems support wirelessly downloading the data from the aircraft and getting it to the flight data analysis system without human intervention. For example, the flight data analysis system may facilitate the transmission of data, automatic and continuous processing of the data (including data filtering and organization, correlation with other data sources, and identification of significant events and measurements), human analysis of the processed data, presentation of results, and monitoring of the effectiveness of corrective actions taken based thereon.

Various operations may be performed on flight data by analysts, mathematicians, engineers, and the like, through a flight data analysis framework of the flight data analysis system. The operations may be used to answer questions and to discover, interpret, and communicate various patterns and trends within the flight data. These analytics may be studied and used to take actions to improve aircraft operations. However, there is often a struggle between the capabilities of a domain specific programming language that is built into the flight data analysis framework, access to data that a user needs to operate on, and running desired data analytics on a large data set. As a result, it is difficult for analysts and programmers to create the analytics they desire and to run the analytics consistently across data from different sources.

### BRIEF DESCRIPTION

According to one aspect, there is provided is a method for analyzing transportation data within a transportation analytics framework, the method including receiving transportation data having a representation that is compatible with the transportation analytics framework including a transportation analytics programming language, converting the transportation data into a representation compatible with a second programming language that is different than the transportation analytics programming language, and performing analytics on the converted transportation data within the transportation analytics framework using at least one analytic generated based on the second programming language.

In another aspect, there is provided a device for analyzing transportation data within a transportation analytics framework, the device including a receiver configured to receive transportation data having a representation that is compatible with the transportation analytics framework including a transportation analytics programming language, and a processor configured to convert the transportation data into a representation compatible with a second programming language that is different than the transportation analytics programming language, and perform analytics on the converted transportation data within the transportation analytics framework using at least one analytic generated based on the second programming language.

In another aspect, there is provided a non-transitory computer readable medium having stored therein instructions that when executed cause a computer to perform a method for analyzing transportation data within a transportation analytics framework, the method including receiving transportation data having a representation that is compatible with the transportation analytics framework including a transportation analytics programming language, converting the transportation data into a representation compatible with a second programming language that is different than the transportation analytics programming language, and performing analytics on the converted transportation data within the transportation analytics framework using at least one analytic generated based on the second programming language.

Other features and aspects may be apparent from the following detailed description, the drawings, and the claims.

### BRIEF DESCRIPTION OF THE DRAWINGS

Features and advantages of the example embodiments, and the manner in which the same are accomplished, will become more readily apparent with reference to the following detailed description taken in conjunction with the accompanying drawings.
FIG. 1 is a diagram illustrating an example of an aircraft 10 having sensors thereon in accordance with an example embodiment.
FIG. 2 is a diagram illustrating an overview of a flight analytics system in accordance with an example embodiment.
FIG. 3 is a diagram illustrating a data transformation process in accordance with an example embodiment.
FIG. 4 is a diagram illustrating an architecture of a flight analytics framework in accordance with an example embodiment.
FIG. 5 is a diagram illustrating a data flow for converting flight data within the flight analytics framework in accordance with an example embodiment.
FIG. 6 is a diagram illustrating a method for analyzing flight data in a flight analytics framework in accordance with an example embodiment.
FIG. 7 is a diagram illustrating a device for analyzing flight data within a flight analytics framework in accordance with an example embodiment.
FIG. 8 is a diagram illustrating a method of converting flight data in accordance with an example embodiment.

Throughout the drawings and the detailed description, unless otherwise described, the same drawing reference numerals will be understood to refer to the same elements, features, and structures. The relative size and depiction of these elements may be exaggerated or adjusted for clarity, illustration, and/or convenience.

### DETAILED DESCRIPTION

In the following description, specific details are set forth in order to provide a thorough understanding of the various example embodiments. It should be appreciated that various modifications to the embodiments will be readily apparent to those skilled in the art, and the generic principles defined herein may be applied to other embodiments and applications without departing from the scope of the invention. Moreover, in the following description, numerous details are set forth for the purpose of explanation. However, one of ordinary skill in the art should understand that embodiments may be practiced without the use of these specific details. In other instances, well-known structures and processes are not shown or described in order not to obscure the description with unnecessary detail. Thus, the present disclosure is not intended to be limited to the embodiments shown, but is to be accorded the widest scope consistent with the principles and features disclosed herein.

When performing data analytics, there is often a struggle between the capability of a built-in or domain specific programming language of a transportation analytics framework, access to the data to be operated on, and orchestrating the performance of the data analytics on a large data set. The examples herein solve these issues for transportation data analytics by providing analysts (e.g., programmers, engineers, mathematicians, etc.) with the ability to generate analytics on transportation data using well-known industry standard languages from within the transportation analytics framework. Accordingly, analysts may generate analytical operations in a programming language they are more comfortable with in addition to generating analytical operations using a built-in transportation analytics programming language. The examples also allow an analyst to use large supporting libraries of code and capabilities that each standard language provides while generating and running analytics within the transportation analytics framework. A further advantage is that the framework provides analysts with a larger set of tools for tackling analytical jobs by supporting multiple programming languages within the transportation analytics framework in addition to the built-in transportation analytic programming language. As a result, analysts have the option to use multiple programming languages to generate a particular analytic and the capability to generate the analytic using a programming language which is best tailored for the task.

In the examples provided herein, the transportation data that is analyzed is flight data from an aircraft such as a plane, helicopter, jet, and the like. The flight data is analyzed within a flight analytics framework having a built-in or a domain specific flight analytics programming language. However, the examples are not limited to flight based transportation, and it is understood that the transportation analytics framework may be applied to other industries such as trains, subways, buses, and the like. As another example, locomotive data may be analyzed in a locomotive analytics framework having a domain specific locomotive analytics programming language. In this example, analysts may generate analytical operations in a different programming language in addition to generating analytical operations using a built-in locomotive analytics programming language.

The examples of the flight analytics framework described herein offer a comprehensive solution for improving data access and analytics orchestration by enabling an analyst to utilize a programming language they are familiar with and all the power and expressivity they bring with it by enhancing the flight analytics framework to support other languages. By generating operations using other programming languages within the flight analytics framework, an analyst may utilize tried and tested analytics orchestration provided by the flight analytics framework while running their enhanced analytics on data from millions of flights with ease using flight data from the flight data analysis system. For example, the flight data can be historic sets of data saved over time and also continuous incoming data received in near real-time from the aircraft.

According to various examples, a transformation layer of the flight analytics framework can be a glue that combines the various programming languages and the flight data within the flight analytics framework thereby allowing the analyst to mix and match the programming language of their choice to build their analytics. This also allows for seamlessly calling from one programming language into another and back out again with the use of language specific connector pieces (e.g., adapters) which can transform or otherwise convert the flight data into a format most appropriate for a given programming language. Thus, scientists and analysts can more quickly create complex analytics using a programming language or languages they are already familiar with.

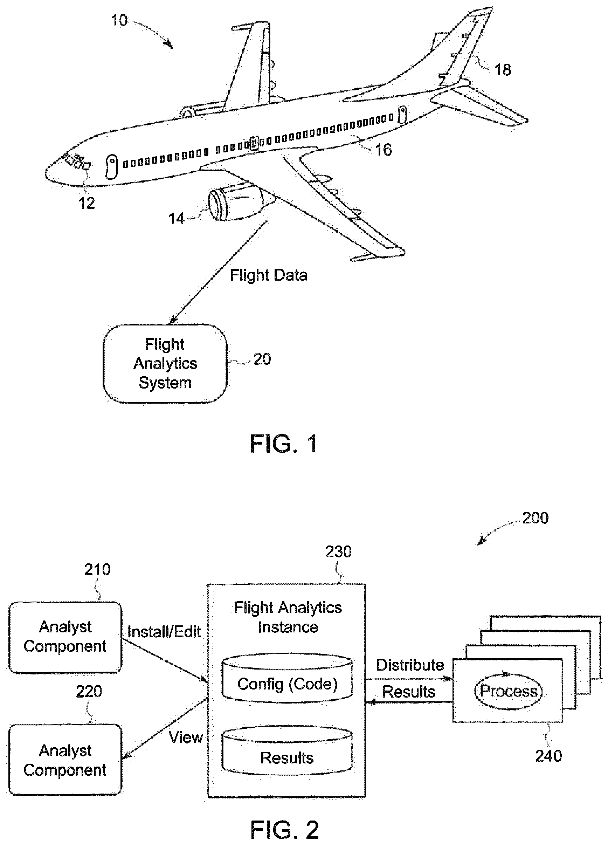

FIG. 1 illustrates a transportation analysis system including a vehicle having sensors thereon in accordance with an example embodiment. In this example, the vehicle is an aircraft 10 which is in communication with a flight analytics system 20 which may include a flight analytics framework having a domain specific flight analytic programming language. For example, data captured or otherwise collected from or about the aircraft 10 and the surrounding environment may be transmitted to the flight analytics system 20 and analyzed within the flight analytics framework described according to various example embodiments. For example, the flight analytics framework may be accessed through the flight analytics system 20. Referring to FIG. 1, sensors such as sensor groups 12, 14, 16, and 18, may be placed on the aircraft 10. The sensors may be wired and/or wireless sensors and they may be placed on the exterior, interior, and the like, of the aircraft 10. For example, the sensors 12, 14, 16, and/or 18 may be used to measure data about the flight such as fuel usage, speed, distance traveled, vertical height, temperature, mass, weight, acceleration, pressure, weather, temperature, and the like. As another example, the sensors 12, 14, 16, and/or 18 maybe used to measure how parts of the aircraft are performing. The location of the sensors and the data measured by the sensors 12, 14, 16, and 18 is not limited by the embodiments herein.

FIG. 2 illustrates an overview of a flight analytics system 200 in accordance with an example embodiment. Referring to FIG. 2, the system 200 includes analyst components 210 and 220, a flight analytics instance 230, and a plurality of processing components 240. In the examples herein, a processing component 240 may refer to a thread, a process, a worker, an instance, and the like, running on a machine or a plurality of machines. For example, a processing component 240 may receive analytics and flight data, process the analytics on the flight data, and return a result of the analytics. In this example, the flight analytics system 200 may include a flight analytics framework within which the analyst components 210 and 220 can implement software, code, operations, formulas, and the like, to perform analytics on flight data that is received from aircraft flights. For example, a back-end server may run flight analytic instances 230 that an analyst component 210, 220, or other user can connect to. The analyst components 210 and 220 may connect to the server executing the flight analytics instance 230 through a network such as the Internet, cellular, and the like. That is, the analyst components 210 and 220 may correspond to workstations used by users (i.e., programmers) for generating analytics. Here, a workstation may include a computer, a laptop, a notebook, a tablet, a mobile phone, a television, a kiosk, and the like. The analyst components 210 and 220 may install, develop, test, and edit various analytics within the flight analytics instance of the server using a built-in or domain specific flight analytics programming language of the flight analytics framework. The analytics generated by the analyst components 210 and 220 may include algorithms and formulas generated using the built-in flight analytics programming language. Here, an analyst component 210 and/or 220 may install a new analytic or configuration which can cause a processing component 240 to launch and execute the new analytic/configuration.

According to various embodiments, the flight analytics framework may also support one or more other programming languages in addition to the domain specific flight analytics programming language. For example, the other programming languages may not be domain specific to a flight analytics framework, but instead, may be general analytics languages or other programming languages. As a non-limiting example, the one or more programming languages supported by the flight analytics framework may include R, Python, C Sharp (C#), and the like. Accordingly, the analyst components 210 and/or 220 may also develop, test, and edit various flight analytics within the flight analytics instance 230 using one or more of the other programming languages. The analytics generated by the analyst components 210 and 220 may include algorithms and formulas generated using the other programming languages providing different opportunities for an analyst to analyze data. By using additional programming languages, a user or programmer may more quickly create complex analytics within the flight analytics framework. Also, a user may have more options and more expressivity as a result of having multiple different programming languages available within the flight analytics framework. When an analyst is satisfied with the analytics, they may publish or install the analytics to the flight analytics instance.

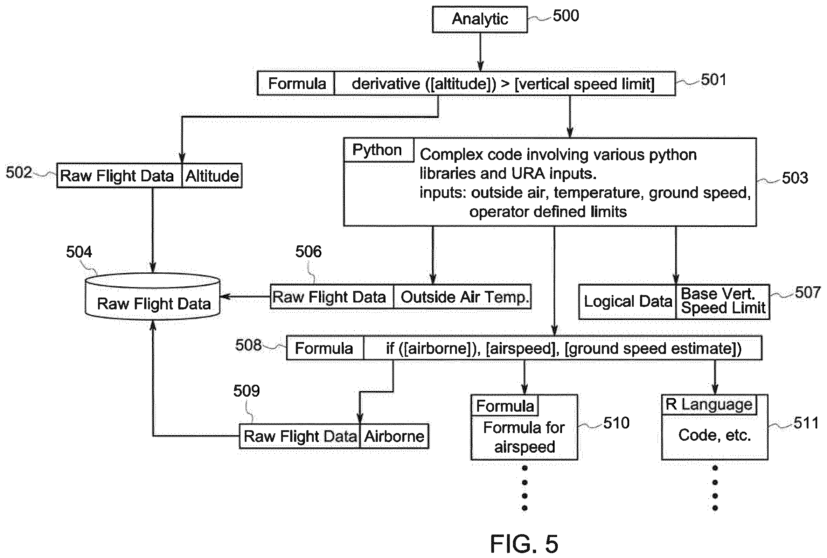

In the example of FIG. 2, analyst component 210 may generate or develop analytics using one or more programming languages other than a built-in flight analytics programming language. In this example, the analyst component 220 may receive and display a result of the flight analytics generated by analyst component 210. The analytics developed by the analyst components 210 and/or 220 according to various embodiments may communicate with each other in a language neutral fashion and may share data and functionality even though the analytics may be written based on different programming languages. To achieve this, the flight analytics framework may convert flight data (originally in a format usable by the built-in flight analytics programming language) into a format or representation that is usable by one or more other programming languages other than the built-in flight analytics programming language, for example, using software handlers as described in the example of FIG. 5. The conversion of data may occur at a processing component 240 and may occur in real time or on the fly. The data received from a flight along with analytical code (e.g., formulas and analytics) generated by an analyst component 210 or 220 may be transmitted to a processing component 240 and be executed at runtime by the processing component 240. Accordingly, the processing component 240 or a plurality of processing components 240 may convert the flight data and process the analytics on the converted flight data to generate analytic results. In some examples, the processing component 240 may also convert the data result of the analytics back to a format that is compatible with the domain specific or built-in programming language of the flight analytics framework.

Here, the processing component 240 may correspond to a distributed processing worker instance. For example, each processing component 240 may be a separate machine or computer. The overall system 200 may scale horizontally allowing additional processing component 240 to be able to complete more work in the same amount of time. The flight analytics instance 230 may receive flight data stored therein or from another source and also receive analytics generated by one or more of the analyst components 210 and 220. The analytics may be generated based on the built-in or domain specific flight analytics programming language and/or another programming language or languages. Based on the language that is used, the processing component 240 may transform or convert the flight data into a format that is usable by the generated analytics. The configuration of the analytics and the converted flight data may be processed by the processing component 240 for processing the converted flight data and the generated analytics to generate results. The results may be transmitted back to the flight analytics instance 230 where they may be stored, for example, under the control of the server. In some examples, the results may be converted back into a format of the built-in flight analytics programming language or another format for use by another analytic generated using a different programming language and then be available through the flight analytics instance 230.

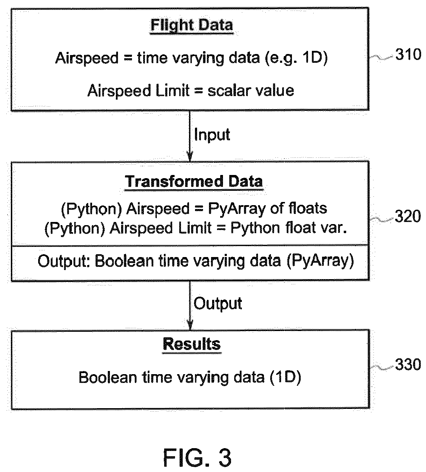

FIG. 3 illustrates a data transformation process in accordance with an example embodiment. Referring to FIG. 3, the built-in or domain specific flight analytics programming language may be configured to use data having a one-dimensional time series format, and may generate analytics or results in the same format. For example, time series data in 310 may include data points over time based on measurements performed by sensors and other equipment on an aircraft such as the aircraft shown in FIG. 1. According to various aspects, the time series data may be converted into a representation or format that is most easily usable by another programming language that is not domain specific to the flight analytics framework such as R, Python, C#, and the like.

As described herein, a flight analytics system may require data to adhere to a data model. The built-in or domain specific flight analytics language may adhere to this data model as do other parts of the flight analytics system. However, according to the examples herein, the data may be transformed into a format that is compatible with other programming languages that are not domain specific to the flight analytics system. In addition, analytics may be performed on the transformed data using these other programming languages, and the data may be transformed back into the format of the data model of the flight analytics system. For example, the flight analytics framework may transform or convert the time series data into data used in another programming language such as the Python programming language in 320. An example of data transformation is described with respect to the example shown in FIG. 5, and will be further described below. For example, the time series data may be converted into a PyArray in 320 which is commonly used in the Python programming language. In this example, an analyst or other user may generate analytics in the Python programming language and run the analytics on the time series flight data which has been converted into the PyArray data representation. The result of the analytics performed using the Python programming language in 320 is a Boolean time varying data also in the format of a PyArray. In 330, a result of the analytics may be converted from Python format into a format or data model that is used by the flight analytics framework. Accordingly, the PyArray data may be converted into one-dimensional time varying data as shown in 330.

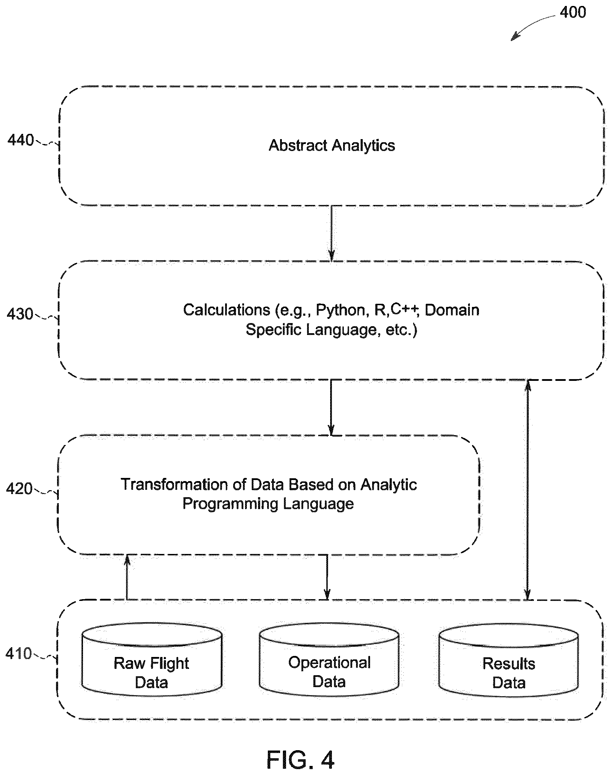

FIG. 4 illustrates an architecture 400 of a flight analytics framework in accordance with an example embodiment. Referring to FIG. 4, the architecture 400 includes a data layer 410, a transformation layer 420, an application layer 430, and an abstract analytics layer 440. In this example, the data layer 410 includes raw flight data that may be collected from sensors on or about an aircraft. As another example, the data layer 410 may include operational data about the aircraft and its parts. Analytics may be performed on data from the data layer 410 within the flight analytics framework. Here, the analytics may be abstract analytics generated in the abstract analytics layer 440. As a non-limiting example, the abstract analytics may include questions, queries, interrogatories, and the like, about airspeed, fuel usage, acceleration, height, weight, temperature, aircraft components, weather, and the like. The type of abstract analytics are not limited. In the example of FIG. 4, the application layer 430 includes the programming code, formulas, and/or the like used to perform the abstract analytics on the data from the data layer 410. For example, an analytic generated in the abstract analytics layer 440 may be "what was the max engine gas temperature during cruise of a flight?" Meanwhile, the applications layer 430 may execute a calculation or a formula applied to flight data to determine the max engine gas temperature during the flight.

In some cases, calculations from the application layer 430 may be applied to data extracted directly from the data layer 410. As another example, analytics may be performed using code or formulas generated using a programming language that is not domain specific to the flight analytics framework, for example, Python, R, C#, and the like. In this example, the data may be transformed by transformation layer 420 into a data format of the other programming language and the calculations may be applied to the converted flight data. To perform data conversion, each language may have its own respective handler within the flight analytics framework. For example, Python may have a corresponding Python handler, R may have a corresponding R handler, C# may have a corresponding C# handler, and the like. When the flight analytics framework encounters a formula from one of these languages, the flight analytics framework may call the corresponding handler which may convert data into a format compatible with the respective language. As an example, when the flight analytics framework attempts to perform an analytic generated in Python, the flight analytics framework may call the Python handler to transform raw time series flight data into a format such as a py array that is usable with the Python programming language. Accordingly, the raw data may be converted and analytics may be performed on the transformed data using Python code. In this case, each programming language may have its own language specific connectors for converting flight data into a particular format.

Furthermore, whether the calculations in application layer 430 are performed using the domain specific flight programming language (time series data) or a different programming language (transformed data), a result of the analytics may be stored in the data layer 410. In an example in which the analytics are performed using the domain specific flight analytics programming language, the resulting data is already in a format of the flight analytics framework and may be stored directly in the data layer 410. As another example, if the analytics are performed on transformed data using a general programming language, the resulting analytics may be converted back to the data format of the flight analytics framework using a respective handler of the general programming language. That is, the handlers may convert data in a bi-directional fashion. The converted data may then be stored in the data layer 410.

FIG. 5 illustrates a data flow for converting flight data within the flight analytics framework in accordance with an example embodiment. The data flow is performed via a hub and spoke model within the flight analytics framework. In this example, the hub is a type of controller or program included within the flight analytics framework. According to various aspects, flight data that is domain specific to the flight analytics framework may be converted or transformed into different formats (i.e., shapes) such that the data is capable of being operated on by a second programming language that is not domain specific to the flight analytics framework. In the example of FIG. 5, time series flight data that is domain specific to the flight analytics framework may be converted into a format that is capable of being operated on by a general purpose programming language such as Python, R, C #, and the like. Each language may have their own language specific connectors such as handlers that are used to convert the flight data into a respective format for the respective language. In these cases, the hub may call the handlers to perform such conversions. After the conversion, data analytics may be performed on the converted flight data using the respective language. In addition, the results of the analytics may be converted back into a format that is domain specific to the flight analytics framework using the handlers such that additional analytics may be performed, additional conversions may occur, and the like.

Referring to FIG. 5, an analytic 500 may be processed by a computing device such as a processing component shown in FIG. 2. In this example, the analytic 500 includes a formula 501 of a domain specific programming language of the flight analytics framework. Accordingly, the hub calls a handler of the domain specific flight analytics programming language which determines that the formula 501 receives an altitude variable and a vertical speed limit variable. Here, the altitude variable is flight data 502 and includes an identifier. Accordingly, the hub calls a handler of the raw flight data which collects and returns the altitude variable from raw flight data storage 504 using the identifier. The vertical speed limit variable is a result of a Python formula 503 and may include an identifier or other information indicating the variable is a Python formula. Accordingly, the hub calls the Python handler. In this case, in order for the Python formula 503 to generate a data value it must receive inputs from raw flight data 506, logical data 507, and another formula 508 of the domain specific programming language. Accordingly, the hub calls the respective handlers (e.g., raw flight data handler, logical data handler, and handler of the domain specific programming language). The process in FIG. 5 may continue until the data inputs are received and data values are generated for each formula resulting in a data value being generated for the analytic 500.

As an example of data conversion, when the Python formula 503 receives data as an input, it maybe in the form of the domain specific data format, a format of another programming language, and the like. In such cases, the data may be converted into a format that is compatible with Python (e.g., the Python formula 503). In this case, the hub may call the Python handler to convert the data into a format that is compatible with the Python programming language. Furthermore, when the data is processed within the Python formula 503, the result of the processed data may remain in the format compatible with Python. Accordingly, the hub may call the Python handler to convert the data into the time series format that is compatible with the domain specific programming language of the flight analytics framework. In this example, the flight analytics framework abstracts away the storage and the locality of different data sources of flight data. According to various aspects, the flight analytics framework may support applying the transformations (e.g., the conversions) to the flight data, for instance using a domain specific flight programming language as well as other programming languages such as Python, R, C#, and the like. To perform data conversion, the flight analytics framework may define an open structure for resolvables which are defined by specific resolvers. The flight analytics framework may enumerate these resolvables, provide an interface for the results returned, and add in handlers for new types of data pieces.

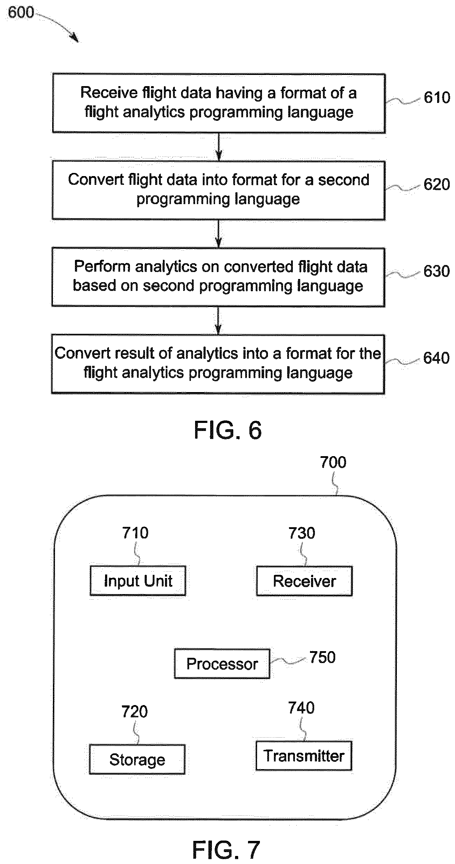

FIG. 6 illustrates a method 600 for analyzing flight data in a flight analytics framework in accordance with an example embodiment. For example, the method 500 may be performed by an analyst computing device, a server, a combination thereof, and the like, using the flight analytics framework. Referring to FIG. 6, in 610 flight data is received. The flight data has a format that adheres to a data model supported by a flight analytics system. For example, the flight analytics system may be an event measurement system (EMS), and the like. The flight data may have the format of one-dimensional time series data and may be captured by one or more sensors and other equipment of an aircraft. As a non-limiting example, the flight data may include airspeed, altitude, temperature, cruising time, throttle activity, acceleration, and the like. The time series flight data may have a representation that is usable by the flight analytics programming language.

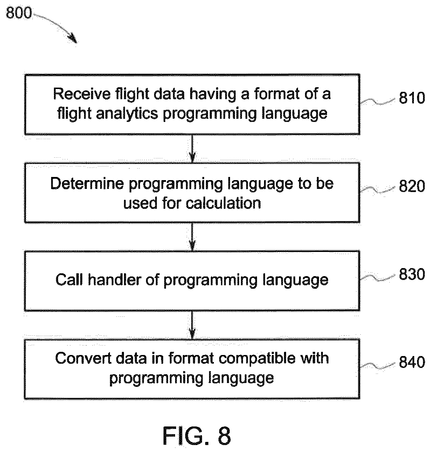

In 620, the flight data is converted from a format of the flight analytics programming language into a format of a second programming language. For example, the second programming language may be R, Python, C #, and the like. Flight data may have various representations or "shapes" which may be analyzed using flight analytics. The flight data in the flight analytics system format may be converted into the format for the second programming language using one or more language specific connectors such as the example connectors shown in FIG. 5, and the like. The converting may include converting the flight data from a flight analytics system representation to a native language representation used by the second programming language. As one example, Python commonly uses PyArrays as a data input. According to various exemplary embodiments, the flight analytics framework may convert the flight data into a format that can be input into algorithms generated using the second programming language. A method 800 for converting flight data is shown in FIG. 8. In this example, flight data is received in 810 and has a format of a flight data analysis system including the flight analytic framework. In 820, a programming language of a calculation is determined, and in 830 a handler of the programming language is called. In 840, the handler converts the data into a format that is compatible with the second programming language. That is, the flight data is converted into a representation compatible with a second programming language that is different than the domain specific programming language of the flight analytics framework.

Analytics are performed on the converted flight data in 630 using the second programming language. Here, the analytics may be performed within the flight analytics framework using at least one analytic generated based on the second programming language. The at least one analytic may also be performed using at least one library of the second programming language. The analytics may be used to answer high level queries about aircraft information. In 640, a result of the analytics is converted into a format usable by the flight analytics framework.

FIG. 7 illustrates a device 700 for analyzing flight data within a flight analytics framework in accordance with an example embodiment. For example, the device 700 may be performed by an analyst computing device, a server, a combination thereof, and the like, using the flight analytics framework. Referring to FIG. 7, the device 700 includes an input unit 710, a storage 720, a receiver 730, a transmitter 740, and a processor 750. The input unit 710 may include any known components for receiving user input, for example, a mouse, a keyboard, keypad, motion detector, speech recognizer, and the like. The storage 720 may store analytics, flight data, results, and the like, which are generated and/or received within the flight analytics framework. The transmitter 740 and the receiver 730 may transmit and receive data, for example, through a wired or wireless connection. The transmitter 740 and the receiver 730 may correspond to a network interface capable of transmitting and receiving data over a network such as the Internet, a radio interface capable of transmitting and receiving data through radio signals, and the like. The processor 750 may control the overall operations of the device 700 including the other components. Also, it should be appreciated that the device 700 may include additional components not shown in FIG. 7, or may not include all of the components shown in FIG. 7.

The receiver 740 may receive flight data having a representation for a flight analytics system corresponding to the flight analytics framework executed by the device 700. For example, the flight data may be data gathered by one or more sensors of an aircraft and transmitted to the device 700 in real-time, received from another device, stored in the storage 720, and the like. The processor 750 according to various example embodiments may convert the flight data into a representation for a second programming language that is different than the flight analytics programming language. For example, the flight data may initially have a time series representation that is configured to be used by the flight analytics programming language. Therefore, the processor 750 may convert the flight data from the time series representation into a representation that can be input to code of the second programming language. Here, the processor 750 may convert the flight data using one or more language specific connector pieces that are specific depending on which language the flight data is being converted into. For example, R may have a specific connector, Python may have a specific connector, C# may have a specific connector, and the like. The converting may convert the flight data into a native representation of the second language, or into an approximation of the native language of the second language.

The processor 750 may also perform analytics on the converted flight data within the flight analytics framework using at least one analytic generated based on the second programming language. The processor 750 may also perform analytics on the converted flight data using at least one library of the second programming language. After performing the analytics, the processor 750 may convert a result of the performed analytics into a representation for the flight analytics framework.

Various examples provided herein relate to an enhanced flight analytics framework that may support a built-in flight analytics programming language and one or more other programming languages that are not built into the flight analytics framework thus enhancing the analytical capabilities of the flight analytics framework. By expanding the flight analytics framework to support additional programming languages, analysts have the option to use a programming language that they are more familiar with to generate flight analytics. Also, by increasing the amount of programming languages supported by the flight analytics framework, the amount of analytics that may be performed may be greatly expanded. Accordingly, the enhanced flight analytics framework may provide enhanced analytical capabilities thereby helping aircraft operate more efficiently and with less environmental impact.

As will be appreciated based on the foregoing specification, the above-described examples of the disclosure may be implemented using computer programming or engineering techniques including computer software, firmware, hardware or any combination or subset thereof. Any such resulting program, having computer-readable code, may be embodied or provided within one or more non transitory computer-readable media, thereby making a computer program product, i.e., an article of manufacture, according to the discussed examples of the disclosure. For example, the non-transitory computer-readable media may be, but is not limited to, a fixed drive, diskette, optical disk, magnetic tape, flash memory, semiconductor memory such as read-only memory (ROM), and/or any transmitting/receiving medium such as the Internet or other communication network or link. The article of manufacture containing the computer code may be made and/or used by executing the code directly from one medium, by copying the code from one medium to another medium, or by transmitting the code over a network.

The computer programs (also referred to as programs, software, software applications, "apps", or code) may include machine instructions for a programmable processor, and may be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, programmable logic devices (PLDs)) used to provide machine instructions and/or data to a programmable processor, including a machine-readable medium that receives machine instructions as a machine-readable signal. The "machine-readable medium" and "computer-readable medium," however, do not include transitory signals. The term "machine-readable signal" refers to any signal that may be used to provide machine instructions and/or any other kind of data to a programmable processor.

The above descriptions and illustrations of processes herein should not be considered to imply a fixed order for performing the process steps. Rather, the process steps may be performed in any order that is practicable, including simultaneous performance of at least some steps. Although the disclosure has been described in connection with specific examples, it should be understood that various changes, substitutions, and alterations apparent to those skilled in the art can be made to the disclosed embodiments without departing from the scope of the invention as set forth in the appended claims.

Various aspects and embodiments of the present invention are defined by the following numbered clauses:
1. A method for analyzing transportation data within a transportation analytics framework, the method comprising:
   receiving transportation data comprising a representation that is compatible with the transportation analytics framework including a transportation analytics programming language;
   converting the transportation data into a representation compatible with a second programming language that is different than the transportation analytics programming language; and
   performing analytics on the converted transportation data within the transportation analytics framework using at least one analytic generated based on the second programming language.
2. The method of clause 1, wherein the transportation data comprises a time series representation of the transportation data and is configured to be used by the transportation analytics programming language.
3. The method of any preceding clause, wherein the transportation analytics programming language is domain specific to the transportation analytics framework and the second programming language is a general purpose programming language.
4. The method of any preceding clause, wherein the converting comprises converting the transportation data into the representation compatible with the second programming language using a handler of the second programming language included in the transportation analytics framework.
5. The method of any preceding clause, wherein the converting comprises converting the transportation data from a transportation analytics language representation to a native language representation configured to be used by the second programming language.
6. The method of any preceding clause, wherein the second programming language comprises at least one of R, Python, and C Sharp.
7. The method of any preceding clause, wherein the performing of the analytics further comprises performing the analytics on the converted transportation data based on at least one library of the second programming language.
8. The method of any preceding clause, wherein the transportation data comprises flight data, the transportation analytics framework comprises a flight analytics framework, and the transportation analytics programming language comprises a flight analytics programming language.
9. The method of any preceding clause, further comprising converting a result of the performed analytics into a representation that is compatible with the transportation analytics framework.
10. A device for analyzing transportation data within a transportation analytics framework, the device comprising:
   a receiver configured to receive transportation data having a representation that is compatible with the transportation analytics framework including a transportation analytics programming language; and
   a processor configured to convert the transportation data into a representation compatible with a second programming language that is different than the transportation analytics programming language, and perform analytics on the converted transportation data within the transportation analytics framework using at least one analytic generated based on the second programming language.
11. The device of any preceding clause, wherein the transportation data comprises a time series representation of the transportation data and is configured to be used by the transportation analytics programming language.
12. The device of any preceding clause, wherein the transportation analytics programming language is domain specific to the transportation analytics framework and the second programming language is a general purpose programming language.
13. The device of any preceding clause, wherein the processor is configured to convert the transportation data into the representation compatible with the second programming language using by executing a handler of the second programming language included in the transportation analytics framework.
14. The device of any preceding clause, wherein the processor is configured to convert the transportation data from a transportation analytics language representation of the transportation analytics programming language to a native language representation of the second programming language.
15. The device of any preceding clause, wherein the second programming language comprises at least one of R, Python, and C Sharp.
16. The device of any preceding clause, wherein the processor is configured to perform the analytics on the converted transportation data based on at least one library of the second programming language.
17. The device of any preceding clause, wherein the transportation data comprises flight data, the transportation analytics framework comprises a flight analytics framework, and the transportation analytics programming language comprises a flight analytics programming language
18. The device of any preceding clause, wherein the processor is further configured to convert a result of the performed analytics into a representation that is compatible with the transportation analytics framework.
19. A non-transitory computer readable medium having stored therein instructions that when executed cause a computer to perform a method for analyzing transportation data within a transportation analytics framework, the method comprising:
   receiving transportation data having a representation that is compatible with the transportation analytics framework including a transportation analytics programming language;
   converting the transportation data into a representation compatible with a second programming language that is different than the transportation analytics programming language; and
   performing analytics on the converted transportation data within the transportation analytics framework using at least one analytic generated based on the second programming language.
20. The non-transitory computer readable medium of any preceding clause, wherein the converting comprises converting the transportation data into the representation that is compatible with the second programming language using one or more language specific connectors.

## Claims

1. A method for analyzing transportation data within a transportation analytics framework, the method comprising:
receiving transportation data comprising a representation (410) that is compatible with the transportation analytics framework (400) including a transportation analytics programming language;
converting the transportation data into a representation (420) compatible with a second programming language that is different than the transportation analytics programming language; and
performing analytics on the converted transportation data (420) within the transportation analytics framework (400) using at least one analytic (430) generated based on the second programming language.

2. The method of claim 1, wherein the transportation data comprises a time series representation (310) of the transportation data and is configured to be used by the transportation analytics programming language.

3. The method of either of claim 1 or 2, wherein the transportation analytics programming language is domain specific to the transportation analytics framework (400) and the second programming language is a general purpose programming language.

4. The method of any preceding claim, wherein the converting comprises converting the transportation data into the representation (420) compatible with the second programming language using a handler (503) of the second programming language included in the transportation analytics framework (400).

5. The method of any preceding claim, wherein the converting comprises converting the transportation data from a transportation analytics language representation (310) to a native language representation (320) configured to be used by the second programming language.

6. The method of any preceding claim, wherein the second programming language (320) comprises at least one of R, Python, and C Sharp.

7. The method of claim 1, wherein the performing of the analytics further comprises performing the analytics (430) on the converted transportation data (420) based on at least one library of the second programming language.

8. The method of any preceding claim, wherein the transportation data comprises flight data (12, 14, 16, and 18), the transportation analytics framework comprises a flight analytics framework (20), and the transportation analytics programming language comprises a flight analytics programming language (20).

9. The method of any preceding claim, further comprising converting a result of the performed analytics (320) into a representation (330) that is compatible with the transportation analytics framework (400).

10. A device for analyzing transportation data within a transportation analytics framework, the device comprising:
a receiver configured to receive transportation data having a representation that is compatible with the transportation analytics framework including a transportation analytics programming language; and
a processor configured to convert the transportation data into a representation compatible with a second programming language that is different than the transportation analytics programming language, and perform analytics on the converted transportation data within the transportation analytics framework using at least one analytic generated based on the second programming language.

11. The device of claim 10, wherein the transportation data comprises a time series representation of the transportation data and is configured to be used by the transportation analytics programming language.

12. The device of either of claim 10 or 11, wherein the transportation analytics programming language is domain specific to the transportation analytics framework and the second programming language is a general purpose programming language.

13. The device of any of claims 10 to 12, wherein the processor is configured to convert the transportation data into the representation compatible with the second programming language using by executing a handler of the second programming language included in the transportation analytics framework.

14. The device of any of claims 10 to 13, wherein the processor is configured to convert the transportation data from a transportation analytics language representation of the transportation analytics programming language to a native language representation of the second programming language.

15. The device of any of claims 10 to 14, wherein the second programming language comprises at least one of R, Python, and C Sharp.
